# EUROPEAN PATENT APPLICATION

(11) **EP 2 560 064 A2**
(43) Date of publication of application: **20.02.2013**
(21) Application number: 11195997.9
(22) Date of filing: 29.12.2011
(51) Int. Cl.: G05F 1/67

(54) **Solar power generating system and junction box thereof**

(30) Priority: 26.07.2011 TW 100126277
(71) Applicant: Delta Electronics, Inc., Taoyuan Hsien 333 (TW)
(72) Inventor: Ma, I-Chen, 333 Chungli Industrial Zone, Taoyuan Hsien (TW); Chiang, Chin-Tsai, 333 Chungli Industrial Zone, Taoyuan Hsien (TW); Cheng, Yueh-Feng, 333 Chungli Industrial Zone, Taoyuan Hsien (TW); Yu, Chen-Yu, 333 Chungli Industrial Zone, Taoyuan Hsien (TW); Chien, Shih-Kai, 333 Chungli Industrial Zone, Taoyuan Hsien (TW)
(74) Representative: 2K Patentanwälte Blasberg Kewitz & Reichel

(57) **Abstract**

A solar power generating system (2) includes at least one solar panel (20) and at least one junction box (21). The solar panel (20) includes at least one photovoltaic cell group (201, 202, 203). The photovoltaic cell group (201, 202, 203) includes plural serially-connected photovoltaic cells. The junction box (21) includes a casing (24), a first power output terminal (25), a second power output terminal (26), and at least one localized maximum power point tracking unit (211, 212, 213). The casing (24) has a receiving space (243). The localized maximum power point tracking unit (211, 212, 213) is disposed within the receiving space (243) of the casing (24). An input side of the localized maximum power point tracking unit (211, 212, 213) is electrically connected with the at least one photovoltaic cell group (201, 202, 203) of the solar panel (20). An output side of the localized maximum power point tracking unit (211, 212, 213) is electrically connected with the first power output terminal (25) and the second power output terminal (26).

## Description

### FIELD OF THE INVENTION

The present invention relates to a solar power generating system, and more particularly to a solar power generating system for implementing a maximum power point tracking technology in a distributed and localized manner. The present invention also relates to a junction box of such a solar power generating system.

### BACKGROUND OF THE INVENTION

Nowadays, the demands on renewable energy are gradually increased. The common renewable energy includes for example solar energy, wind power, tide energy, terrestrial heat, biomass energy, and the like. Among various renewable energy sources, solar energy is expected to replace fossil fuel as a new energy source because it provides clean energy without depletion. In addition, the process of maintaining the solar energy generator is very easy and the operating cost is low. The solar energy generator can be easily installed at homes, schools or business places. The site for installing the solar energy generator is not stringent and does not occupy much space. In addition, the solar energy generator is safe and quiet during operations. In the remote district, the size of the solar energy generator may be specially designed to generate required magnitude of power.

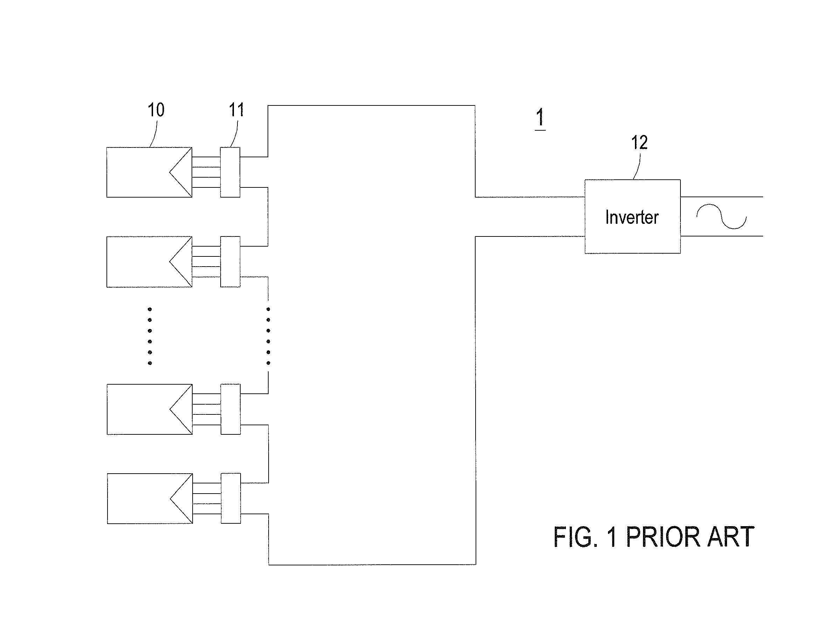

FIG. 1 schematically illustrates the architecture of a conventional solar power generating system. As shown in FIG. 1, the solar power generating system 1 comprises plural solar panels 10, plural junction boxes 11 and an inverter 12. The solar panels 10 are connected with each other in series through these junction boxes 11. These serially-connected solar panels 10 are further electrically connected to the inverter 12. These solar panels 10 are configured for converting solar energy into electric energy. By the inverter 12, the DC voltage from these solar panels 10 is converted into an AC voltage, which is then provided to a power net or a load.

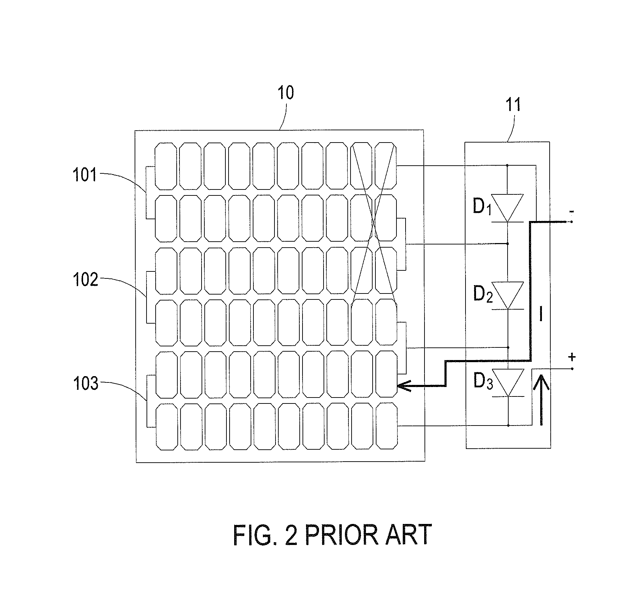

FIG. 2 is a schematic circuit diagram illustrating the connection between the junction box and a corresponding solar panel of the solar power generating system as shown in FIG. 1. As shown in FIGS. 1 and 2, each solar panel 10 comprises several photovoltaic cell groups, for example three photovoltaic cell groups 101, 102 and 103. Each of the photovoltaic cell groups 101, 102 and 103 comprises plural serially-connected photovoltaic cells. These photovoltaic cell groups 101, 102 and 103 are electrically connected with respective bypass diodes D₁, D₂ and D₃ in parallel. These bypass diodes D₁, D₂ and D₃ are included in a single junction box 11. In a case that some of the photovoltaic cells of the photovoltaic cell groups 101, 102 and 103 (e.g. the photovoltaic cells with the sign "X") are obscured or damaged, the current paths corresponding to the obscured or damaged photovoltaic cells are interrupted. Consequently, the bypass diodes D₁, D₂ and D₃ can provide other normal current paths (e.g. the current path I) to transmit electric energy in order to prevent the unintended or irrecoverable damage of the solar panel 10. However, if the light-receiving surface of the solar panel has a shade, the voltage outputted from the conventional solar power generating system 1 is usually largely reduced. Under this circumstance, even if the solar panel has the localized shade (see FIG. 2), the boost mechanism of the inverter 12 may result in undesirable power loss. Moreover, the conventional solar power generating system 1 fails to automatically adjust the output circuitry to compensate the power loss arising from varying solar energy intensity, shade or other factors.

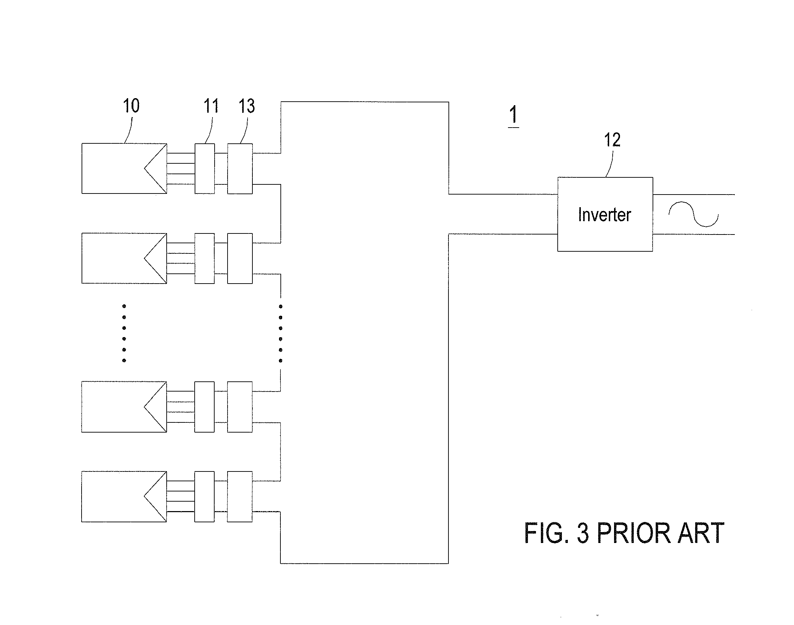

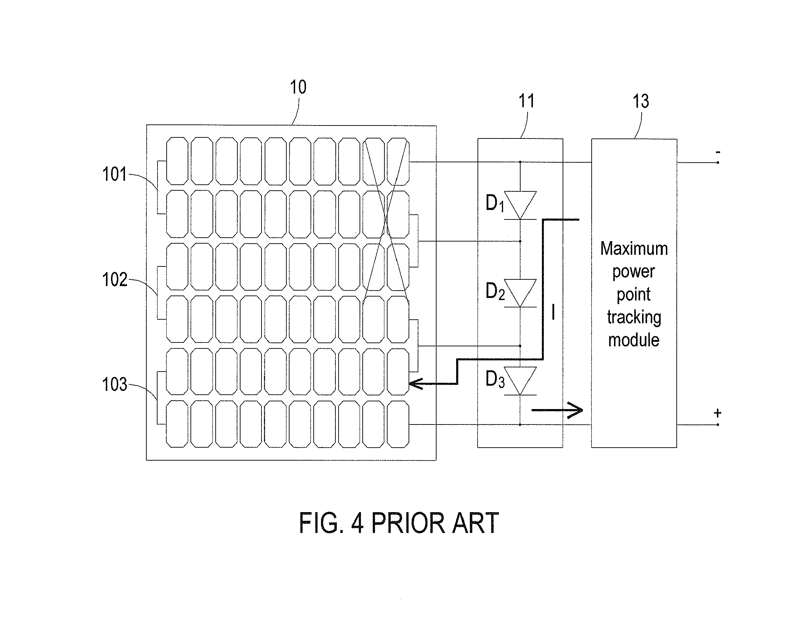

For solving the above drawbacks and increasing the power generation efficiency and the output power, a solar power generating system for implementing a maximum power point tracking technology is disclosed. FIG. 3 schematically illustrates the architecture of a conventional solar power generating system for implementing a maximum power point tracking technology. FIG. 4 is a schematic circuit diagram illustrating the connection between a maximum power point tracking module, a junction box and a solar panel of the solar power generating system as shown in FIG. 3. As shown in FIGS. 3 and 4, the solar power generating system 1 comprises plural solar panels 10, plural junction boxes 11, an inverter 12, and plural maximum power point tracking modules 13. Each of the maximum power point tracking modules 13 is electrically connected with a corresponding junction box 11. The junction box 11 is also electrically connected with a corresponding solar panel 10. The maximum power point tracking module 13 is capable of tracking the maximum power generated from the corresponding solar panel 10 at a certain time spot. In such way, the maximum power point tracking module 13 can automatically adjust the output from the solar panel 10 in order to compensate the power loss arising from varying solar energy intensity, shade or other factors. The circuitry configurations of the maximum power point tracking module 13 are well known in the art, and are not redundantly described herein.

However, since the resolution of the current maximum power point tracking technology is usually insufficient, if the photovoltaic cell groups 101 and 102 of any solar panel 10 are partially sheltered, the photovoltaic cell groups 101, 102 and 103 are partially bypassed by the bypass diodes D₁, D₂ and D₃ of the junction box 11. Consequently, the maximum power point tracking module 13 is only capable of outputting the overall of the unsheltered photovoltaic cell group 103 of the solar panel 10 and retrieving the maximum power thereof. However, since the sheltered regions of the photovoltaic cell groups 101 and 102 of the solar panel 10 fail to retrieve the maximum power, the solar panel 10 fails to provide large amount of output power. Under this circumstance, the overall output power of the conventional solar power generating system 1 is not optimized. For example, in comparison with the normal solar panel 10 having output power of 240 watts, the output power of the solar panel 10 whose photovoltaic cell groups 101 and 102 are partially sheltered is reduced to 79 watts. Since the sheltered regions of the solar panel fails to output the power, the overall output power of the solar power generating system 1 is reduced.

### SUMMARY OF THE INVENTION

The present invention provides a solar power generating system for implementing a maximum power point tracking technology in a distributed and localized manner. The solar power generating system comprises a solar panel and a junction box. One or more localized maximum power point tracking units are included in the junction box, and electrically connected with corresponding one or more photovoltaic cell groups of the solar panel. In such way, the maximum power points of the photovoltaic cell groups of the solar panel are tracked and retrieved. Even if the light-receiving surfaces of the photovoltaic cell groups is partially sheltered, the photovoltaic cell groups are still able to output less power to the inverter. Consequently, output power of each solar panel is increased, and the overall power generation efficiency and the solar power generating system is increased.

The present invention also provides a junction box. The junction box is installed on the solar panel of the solar power generating system. The junction box comprises one or more localized maximum power point tracking units for tracking the maximum power points in a distributed and localized manner. The input sides of the localized maximum power point tracking units are electrically connected with corresponding photovoltaic cell groups of the solar panel. In such way, the maximum power points of the photovoltaic cell groups of the solar panel are tracked and retrieved. Even if the light-receiving surfaces of the photovoltaic cell groups is partially sheltered, the photovoltaic cell groups are still able to output less power to the inverter. Moreover, the junction box has a simplified structure and is easily assembled.

In accordance with an aspect of the present invention, there is provided a solar power generating system. The solar power generating system includes at least one solar panel and at least one junction box. The solar panel includes at least one photovoltaic cell group. The photovoltaic cell group includes plural serially-connected photovoltaic cells. The junction box includes a casing, a first power output terminal, a second power output terminal, and at least one localized maximum power point tracking unit. The casing has a receiving space. The localized maximum power point tracking unit is disposed within the receiving space of the casing. An input side of the localized maximum power point tracking unit is electrically connected with the at least one photovoltaic cell group of the solar panel. An output side of the localized maximum power point tracking unit is electrically connected with the first power output terminal and the second power output terminal. Consequently, the maximum power point of the at least one photovoltaic cell group is tracked by the at least one localized maximum power point tracking unit.

In accordance with another aspect of the present invention, there is provided a solar power generating system. The solar power generating system includes plural solar panel groups and plural junction boxes. The plural solar panel groups are electrically with each other in parallel. Each of the solar panel group includes plural serially-connected solar panels. Each of the solar panels includes at least one photovoltaic cell group. The photovoltaic cell group comprises plural serially-connected photovoltaic cells. The plural junction boxes are electrically connected with corresponding solar panels. Each of the junction boxes includes a casing, a first power output terminal, a second power output terminal, and at least one localized maximum power point tracking unit. The casing has a receiving space. The localized maximum power point tracking unit is disposed within the receiving space of the casing. An input side of the localized maximum power point tracking unit is electrically connected with the at least one photovoltaic cell group of the solar panel. An output side of the localized maximum power point tracking unit is electrically connected with the first power output terminal and the second power output terminal. Consequently, the maximum power point of the at least one photovoltaic cell group is tracked by the at least one localized maximum power point tracking unit.

In accordance with a further aspect of the present invention, there is provided a junction box connected with a solar panel. The solar panel includes at least one photovoltaic cell group. The junction box includes a casing, a first power output terminal, a second power output terminal, and a circuit module. The casing has a receiving space. The circuit module is disposed within the receiving space of the casing, and includes at least one localized maximum power point tracking unit. An input side of the localized maximum power point tracking unit is electrically connected with the at least one photovoltaic cell group of the solar panel. An output side of the localized maximum power point tracking unit is electrically connected with the first power output terminal and the second power output terminal. Consequently, the maximum power point of the at least one photovoltaic cell group is tracked by the at least one localized maximum power point tracking unit.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the architecture of a conventional solar power generating system;

FIG. 2 is a schematic circuit diagram illustrating the connection between the junction box and a corresponding solar panel of the solar power generating system as shown in FIG. 1;

FIG. 3 schematically illustrates the architecture of a conventional solar power generating system for implementing a maximum power point tracking technology;

FIG. 4 is a schematic circuit diagram illustrating the connection between a maximum power point tracking, a junction box and a solar panel of the solar power generating system as shown in FIG. 3;

FIG. 5 schematically illustrates the architecture of a solar power generating system for implementing a maximum power point tracking technology in a distributed and localized manner according to a first embodiment of the present invention;

FIG. 6 is a schematic circuit block diagram illustrating the connection between the junction box and a corresponding solar panel of the solar power generating system as shown in FIG. 5;

FIG. 7 is a schematic circuit diagram illustrating an exemplary localized maximum power point tracking unit of the junction box used in the solar power generating system according to the first embodiment of the present invention;

FIG. 8 is a schematic circuit diagram illustrating another exemplary localized maximum power point tracking unit of the junction box used in the solar power generating system according to the first embodiment of the present invention;

FIG. 9 schematically illustrates the architecture of a solar power generating system for implementing a maximum power point tracking technology in a distributed and localized manner according to a second embodiment of the present invention;

FIG. 10 is a schematic perspective view illustrating the outward appearance of a junction box for use in solar power generating system of the present invention;

FIG. 11 is a schematic exploded view illustrating the internal portion of an exemplary junction box of FIG. 10; and

FIG. 12 is a schematic exploded view illustrating the internal portion of another exemplary junction box of FIG. 10.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

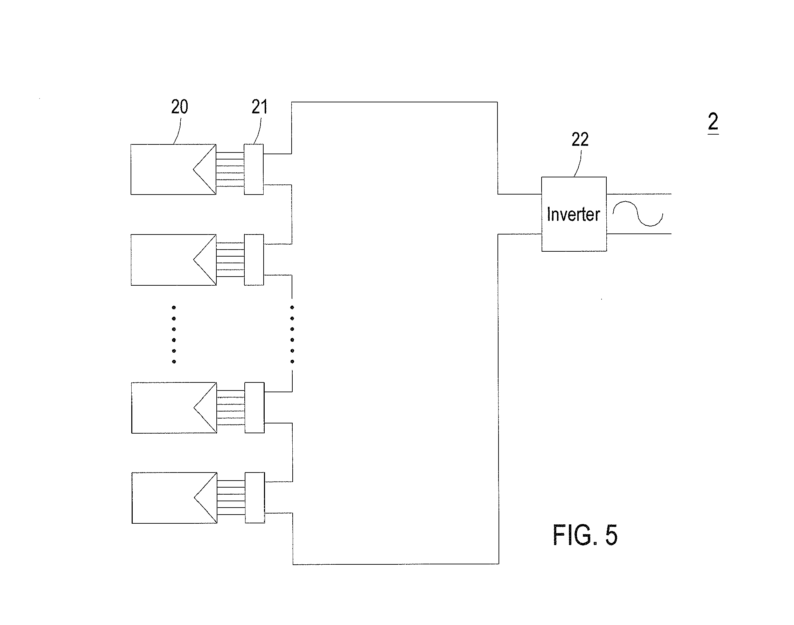

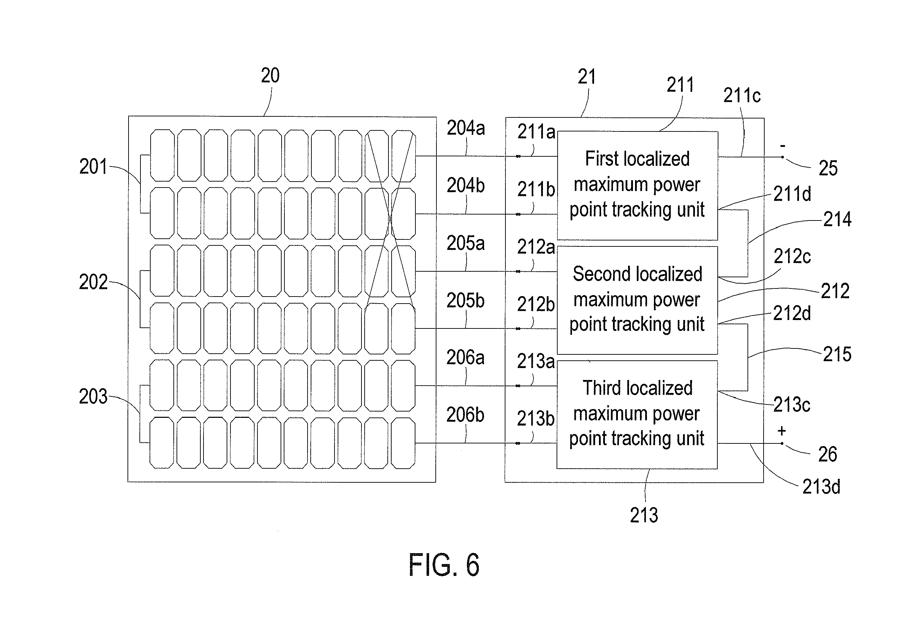

FIG. 5 schematically illustrates the architecture of a solar power generating system for implementing a maximum power point tracking technology in a distributed and localized manner according to a first embodiment of the present invention. FIG. 6 is a schematic circuit block diagram illustrating the connection between the junction box and a corresponding solar panel of the solar power generating system as shown in FIG. 5. The solar power generating system 2 of the present invention comprises plural solar panels 20 (or photovoltaic modules), plural junction boxes 21, and an inverter 22. The solar panels 20 are connected with each other in series through these junction boxes 21. These serially-connected solar panels 20 are further electrically connected to the inverter 22. These solar panels 20 are configured for converting solar energy into electric energy. By the inverter 22, the DC voltage from these solar panels 20 is converted into an AC voltage, which is then provided to a power net or a load.

In this embodiment, each solar panel 20 comprises several photovoltaic cell groups, for example a first photovoltaic cell group 201, a second photovoltaic cell group 202 and a third photovoltaic cell group 203. Each of the photovoltaic cell groups 201, 202 and 203 comprises plural serially-connected photovoltaic cells. For example, each of the photovoltaic cell groups 201, 202 and 203 comprises (but is not limited to) 20 serially-connected photovoltaic cells.

The junction box 21 comprises plural localized maximum power point tracking units, for example a first localized maximum power point tracking unit 211, a second localized maximum power point tracking unit 212 and a third localized maximum power point tracking unit 213. These localized maximum power point tracking units 211, 212 and 213 are included in a casing (not shown in FIG. 6) of the junction box 21. In addition, the input sides of the localized maximum power point tracking units 211, 212 and 213 are respectively connected with the photovoltaic cell groups 201, 202 and 203 of the solar panel 20, respectively. The input side of the first localized maximum power point tracking unit 211 is electrically connected with the first photovoltaic cell group 201. The second localized maximum power point tracking unit 212 is electrically connected with the second photovoltaic cell group 202. The third localized maximum power point tracking unit 213 is electrically connected with the third photovoltaic cell group 203. Moreover, the output sides of the first localized maximum power point tracking unit 211, the second localized maximum power point tracking unit 212 and the third localized maximum power point tracking unit 213 are electrically connected with each in series, and electrically connected with a first power output terminal 25 and a second power output terminal 26 of the junction box 21. Via the first power output terminal 25 and the second power output terminal 26 of the junction box 21, the junction box 21 is electrically connected with the second power output terminal of an adjacent junction box (not shown) and the first power output terminal of another adjacent junction box (not shown).

The localized maximum power point tracking unit 211, 212 and 213 are capable of tracking the maximum power generated from the photovoltaic cell groups 201, 202 and 203 of the corresponding solar panel 20 at a certain time spot, respectively. In such way, the localized maximum power point tracking unit 211, 212 and 213 can automatically adjust the output power from the solar panel 20 in order to compensate the power loss arising from varying solar energy intensity, shade or other factors.

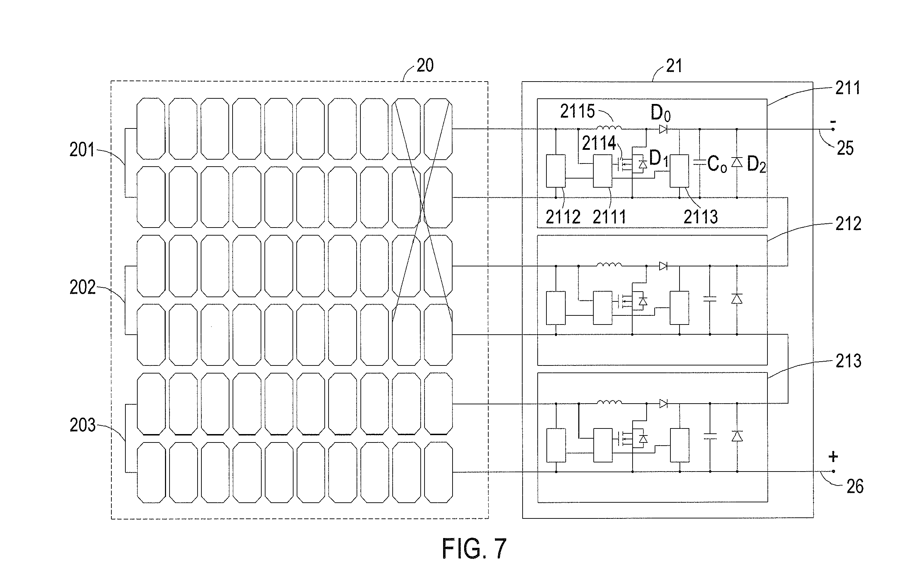

FIG. 7 is a schematic circuit diagram illustrating an exemplary localized maximum power point tracking unit of the junction box used in the solar power generating system according to the first embodiment of the present invention. In this embodiment, the localized maximum power point tracking units 211, 212 and 213 are DC-DC converters or DC-AC converters. The input sides of the localized maximum power point tracking units 211, 212 and 213 are respectively connected with the photovoltaic cell groups 201, 202 and 203 of the solar panel 20, respectively. These localized maximum power point tracking units 211, 212 and 213 have the identical wiring configurations. Take the first localized maximum power point tracking unit 211 for example. The first localized maximum power point tracking unit 211 comprises a controller 2111, an input voltage divider 2112, an output voltage divider 2113, a power switch 2114, a first diode D₁, an inductor 2115, an output diode Dₒ, an output capacitor Cₒ and a second diode D₂. The controller 2111 may output a control signal to a control terminal (e.g. a gate terminal) of the power switch 2114 for controlling the on/off statuses of the power switch 2114. According to the sensed input and output parameters (e.g. the input voltage transmitted from the photovoltaic cell group to the first localized maximum power point tracking unit or the output voltage from the first localized maximum power point tracking unit), the controller 2111 generates the control signal for controlling the on/off statuses of the power switch 2114. In addition, the controller 2111 is configured for controlling a localized maximum power point tracking operation on the first photovoltaic cell group 201, thereby compensating the output voltage and retrieving the maximum power output. The configurations and operating principles of the localized maximum power point tracking unit 211, 212 and 213 are similar to the known maximum power point tracking module, and are not redundantly described herein.

The solar power generating system 2 of the present invention may be operated in a series boost mode, so that the voltage inputted into the input side of the inverter 22 can be increased to the working voltage of the inverter 22. In such way, the power generation efficiency and the output power of each solar panel 20 and the overall solar power generating system 2 will be increased. In addition, the boost mechanism may be automatically adjusted to a constant voltage mode (CV mode), a constant current mode (CC mode) or a constant power mode (CP mode), and applied to various configurations of the inverter 22. In comparison with the conventional solar power generating system 1 as shown in FIGS. 3 and 4, the photovoltaic cell groups 201, 202 and 203 of each solar panel 20 of the solar power generating system 2 are electrically connected to the localized maximum power point tracking unit 211, 212 and 213, respectively. Consequently, the maximum power points of the photovoltaic cell groups 201, 202 and 203 are tracked by the localized maximum power point tracking unit 211, 212 and 213 in a distributed and localized manner. In such way, the resolution is increased to 20 cells for example. Even if the light-receiving surface of the solar panel 20 has a shade, the photovoltaic cell groups 201, 202 and 203 are still capable of retrieving power, and thus the power output of the solar panel is increased. For example, if the photovoltaic cell groups 201 and 202 are partially sheltered, the output power of the first photovoltaic cell group 201 to be retrieved by the first localized maximum power point tracking unit 211 is still 48 watts, and the output power of the second photovoltaic cell group 202 to be retrieved by the second localized maximum power point tracking unit 212 is still 48 watts. Since the photovoltaic cell group 202 is not sheltered by the shade, the output power of the third photovoltaic cell group 203 to be retrieved by the third localized maximum power point tracking unit 213 is 80 watts. Consequently, the total output power of the solar panel 20 is 176 watts (i.e. 48 + 48 + 80 =176), and the overall output power of the solar power generating system 2 is 2336 watts. Under the same operating conditions, only 79 watts of output power of the solar panel 20 of the conventional solar power generating system whose photovoltaic cell groups 101 and 102 are partially sheltered may be retrieved. That is, the solar power generating system 2 of the present invention has more efficiency than the conventional solar power generating system 1 by about 3.88%. Moreover, the solar power generating system 2 of the present invention may be applied to 20-cell, 40-cell or 60-cell solar panels.

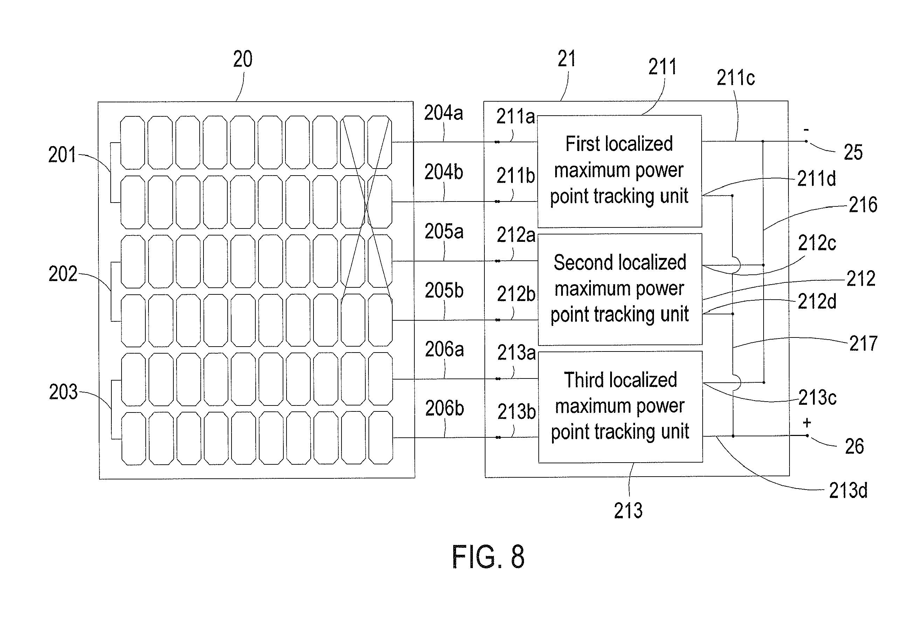

FIG. 8 is a schematic circuit diagram illustrating another exemplary localized maximum power point tracking unit of the junction box used in the solar power generating system according to the first embodiment of the present invention. In this embodiment, each solar panel 20 comprises several photovoltaic cell groups, for example a first photovoltaic cell group 201, a second photovoltaic cell group 202 and a third photovoltaic cell group 203. Each of the photovoltaic cell groups 201, 202 and 203 comprises plural serially-connected photovoltaic cells. For example, each of the photovoltaic cell groups 201, 202 and 203 comprises (but is not limited to) 20 serially-connected photovoltaic cells. The junction box 21 comprises plural localized maximum power point tracking units, for example a first localized maximum power point tracking unit 211, a second localized maximum power point tracking unit 212 and a third localized maximum power point tracking unit 213. These localized maximum power point tracking units 211, 212 and 213 are included in a casing (not shown in FIG. 8) of the junction box 21. In addition, the input sides of the localized maximum power point tracking units 211, 212 and 213 are respectively connected with the photovoltaic cell groups 201, 202 and 203 of the solar panel 20, respectively. The input side of the first localized maximum power point tracking unit 211 is electrically connected with the first photovoltaic cell group 201. The second localized maximum power point tracking unit 212 is electrically connected with the second photovoltaic cell group 202. The third localized maximum power point tracking unit 213 is electrically connected with the third photovoltaic cell group 203. More specially, the output sides of the localized maximum power point tracking units 211, 212 and 213 are electrically connected with each other in parallel, and electrically connected with a first power output terminal 25 and a second power output terminal 26 of the junction box 21. Via the first power output terminal 25 and the second power output terminal 26 of the junction box 21, the junction box 21 is electrically connected with the second power output terminal of an adjacent junction box (not shown) and the first power output terminal of another adjacent junction box (not shown).

In some embodiments, the solar panel of the solar power generating system of the present invention comprises a photovoltaic cell group. In addition, the junction box includes a casing, a first power output terminal, a second power output terminal, and a localized maximum power point tracking unit. The localized maximum power point tracking unit is disposed within the receiving space of the casing. The input side of the localized maximum power point tracking unit is electrically connected with the photovoltaic cell group of the solar panel. The output side of the localized maximum power point tracking unit is electrically connected with the first power output terminal and the second power output terminal, so that the maximum power point of the at least one photovoltaic cell group is tracked by the localized maximum power point tracking unit. That is, in the small-sized solar power generating system, the junction box contains a single localized maximum power point tracking unit.

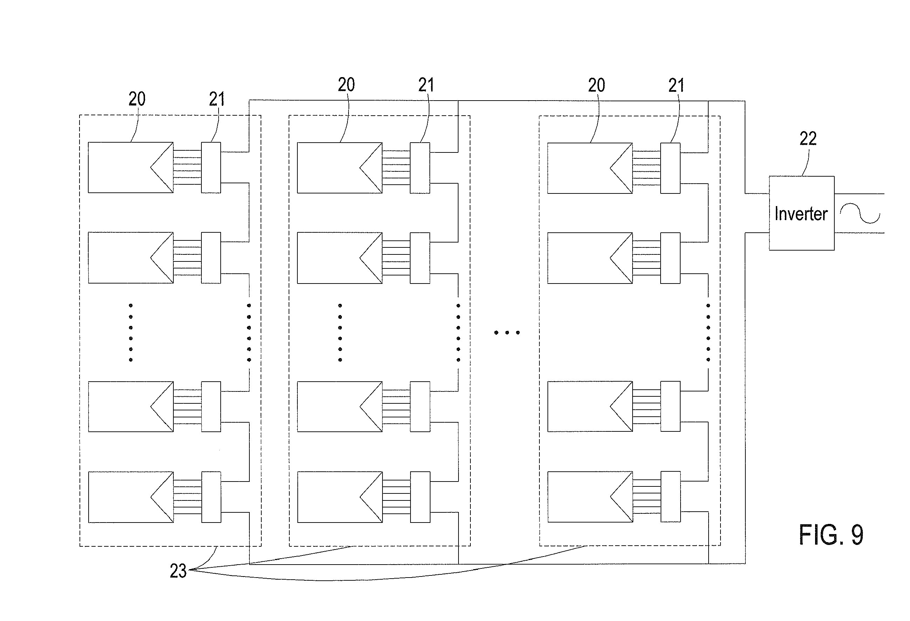

FIG. 9 schematically illustrates the architecture of a solar power generating system for implementing a maximum power point tracking technology in a distributed and localized manner according to a second embodiment of the present invention. The solar power generating system 2 comprises plural solar panels 20 (or photovoltaic modules), plural junction boxes 21 and an inverter 22. These solar panels 20 are divided into plural solar panel groups 23. The solar panels 20 of each solar panel group 23 are connected with each other in series through corresponding junction boxes 21. These solar panel groups 23 are electrically connected with each other in parallel, and further connected with the inverter 22. These solar panels 20 are configured for converting solar energy into electric energy. By the inverter 22, the DC voltage from these solar panel groups 23 is converted into an AC voltage, which is then provided to a power net or a load. The configurations, functions and operating principles of the solar power generating system 2 are similar to those of the solar power generating system as shown in FIGS. 5, 6 and 8, and are not redundantly described herein.

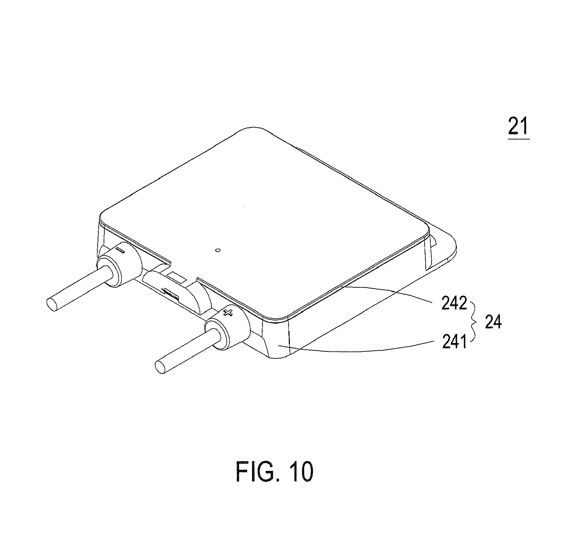

FIG. 10 is a schematic perspective view illustrating the outward appearance of a junction box for use in solar power generating system of the present invention. The junction box has a localized and distributed maximum power point tracking function. The junction box 21 has a casing 24 made of a durable plastic material, which is able to withstand stringent weather conditions and has a use life of many years. In addition, the durable plastic material has an insulating property. As shown in FIG. 10, the casing 24 comprises a base 241 and an upper cover 242. The upper cover 242 is detachably fixed on or engaged with the base 241. In some embodiments, the casing 24 of the junction box 21 is fixed on or attached on a backside of the solar panel 20.

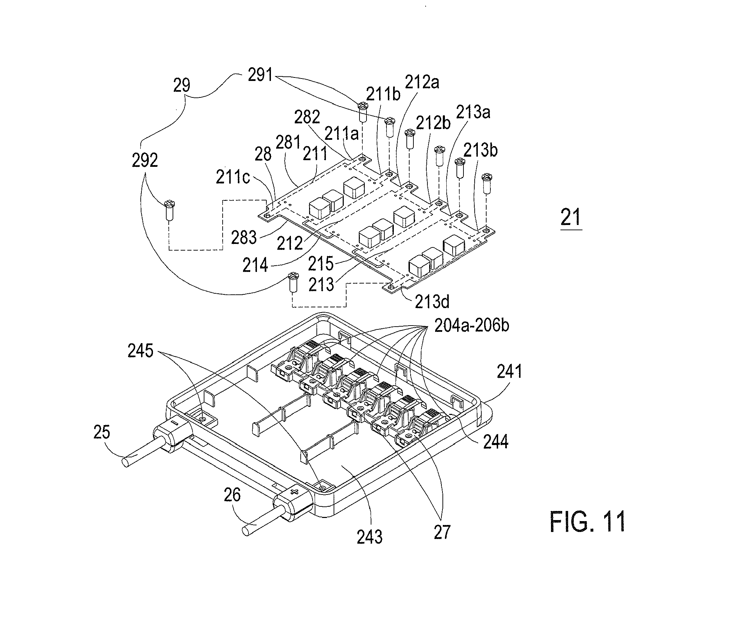

FIG. 11 is a schematic exploded view illustrating the internal portion of an exemplary junction box of FIG. 10. Please refer to FIGS. 6, 10 and 11. The casing 24 of the junction box 21 has a receiving space 243. At least one entrance 244 is located at the lower part of the base 241. Through the at least one entrance 244 of the base 241, plural wire pairs 204 (204a, 204b), 205 (205a, 205b) and 206 (206a, 206b) may be introduced into the internal portion of the casing 24. The junction box 21 further comprises plural wire-connecting members 27, a circuit module 28, a first power output terminal 25, a second power output terminal 26 and plural fastening elements 29. These wire-connecting members 27 are accommodated within the receiving space 243 of the casing 24. Through the entrance 244 of the base 241, the wire-connecting members 27 are electrically connected with respective wire pairs 204, 205 and 206. Each of the wire pairs 204, 205 and 206 comprises a first conductive wire 204a, 205a, 206a and a second conductive wire 204b, 205b, 206b. In some embodiments, the wire-connecting members 27 have respective clamping mechanisms for clamping corresponding conductive wires 204a, 205a, 206a, 204b, 205b, 206b.

The circuit module 28 is replaceable and detachably accommodated within the receiving space 243 of the casing 24, and electrically connected between the wire-connecting members 27 and the first power output terminal 25 and the second power output terminal 26. The circuit module 28 comprises a circuit board 281 and plural localized maximum power point tracking units 211, 212 and 213. The localized maximum power point tracking units 211, 212 and 213 are discretely arranged on the circuit board 281. The localized maximum power point tracking units 211, 212 and 213 are used for tracking the maximum power points. The input side of the localized maximum power point tracking unit 211 comprises a first input terminal 211 a and a second input terminal 211b, and the output side of the localized maximum power point tracking unit 211 comprises a first output terminal 211 c and a second output terminal 211d. The input side of the localized maximum power point tracking unit 212 comprises a first input terminal 212a and a second input terminal 212b, and the output side of the localized maximum power point tracking unit 212 comprises a first output terminal 212c and a second output terminal 212d. The input side of the localized maximum power point tracking unit 213 comprises a first input terminal 213a and a second input terminal 213b, and the output side of the localized maximum power point tracking unit 213 comprises a first output terminal 213c and a second output terminal 213d. The input terminals 211a, 211b, 212a, 212b, 213a and 213b of the localized maximum power point tracking units 211, 212 and 213 are located at a first edge 282 of the circuit board 282, and electrically connected with respective wire-connecting members 27. Consequently, the circuit module 28 can be electrically connected with corresponding conductive wires 204a, 204b, 205a, 205b, 206a and 206b.

The output terminals 211c, 211d, 212c, 212d, 213c and 213d of the localized maximum power point tracking units 211, 212 and 213 are located at a second edge 283 of the circuit board 281. The first output terminal 211 c of the localized maximum power point tracking unit 211 is electrically connected with the first power output terminal 25. The second output terminal 213d of the localized maximum power point tracking unit 211 is electrically connected with the second power output terminal 26. The second output terminal 211d of the localized maximum power point tracking unit 211 is electrically connected with the first output terminal 212c of the localized maximum power point tracking unit 212 through a first conductor line 214. The second output terminal 212d of the localized maximum power point tracking unit 212 is electrically connected with the first output terminal 213c of the localized maximum power point tracking unit 213 through a second conductor line 215. In other words, the first output terminal of the first one of the plural localized maximum power point tracking units is electrically connected with the first power output terminal 25, and the second output terminal of the last one of the plural localized maximum power point tracking units is electrically connected with the second power output terminal 26. In addition, the circuit module 28 further comprises plural conductor lines 214 and 215. The second output terminal of a specified localized maximum power point tracking unit is electrically connected with the first output terminal of an adjacent localized maximum power point tracking unit through a corresponding conductor line. In such way, the plural localized maximum power point tracking units are electrically connected with each other in series through the plural conductor lines.

The circuit module 28 may be fixed on the wire-connecting members 27 by the first group 291 of the fastening elements 29 and fixed on a fixing seat 245 by the second group 292 of the fastening elements 29. For example, the fastening elements 29 are screws.

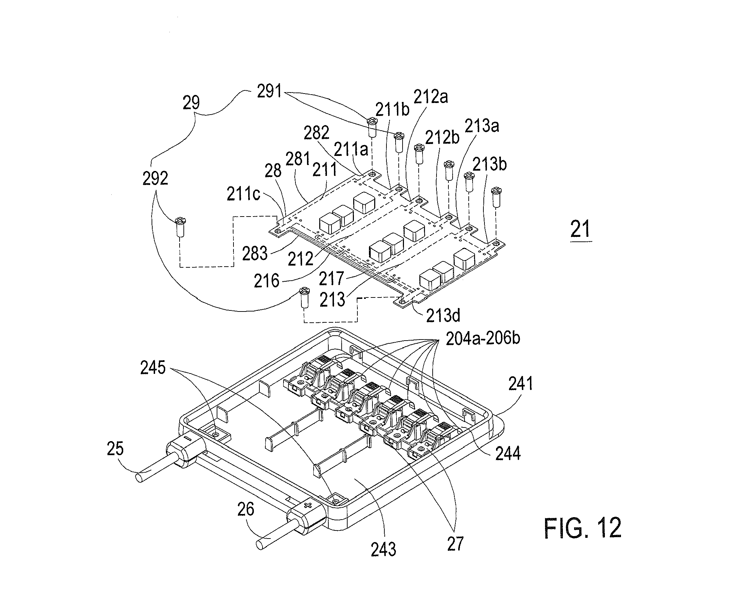

FIG. 12 is a schematic exploded view illustrating the internal portion of another exemplary junction box of FIG. 10. Please refer to FIGS. 8, 10 and 12. In comparison with FIG. 11, the first output terminal 211c of the localized maximum power point tracking unit 211, the first output terminal 212c of the localized maximum power point tracking unit 212 and the first output terminal 213c of the localized maximum power point tracking unit 213 are electrically connected with each other through a conductor line 216 and electrically connected to the first power output terminal 25. Moreover, the second output terminal 211 d of the localized maximum power point tracking unit 211, the second output terminal 212d of the localized maximum power point tracking unit 212 and the second output terminal 213d of the localized maximum power point tracking unit 213 are electrically connected with each other through a conductor line 217 and electrically connected to second power output terminal 26. Through the conductor lines 216 and 217, the output sides of the plural localized maximum power point tracking units are connected with each other in parallel.
In summary there is disclosed a solar power generating system 2 including at least one solar panel 20 and at least one junction box 21. The solar panel 20 includes at least one photovoltaic cell group 201, 202, 203. The photovoltaic cell group 201, 202, 203 includes plural serially-connected photovoltaic cells. The junction box 21 includes a casing 24, a first power output terminal 25, a second power output terminal 26, and at least one localized maximum power point tracking unit 211, 212, 213. The casing 24 has a receiving space 243. The localized maximum power point tracking unit 211, 212, 213 is disposed within the receiving space 243 of the casing 24. An input side of the localized maximum power point tracking unit 211, 212, 213 is electrically connected with the at least one photovoltaic cell group 201, 202, 203 of the solar panel 20. An output side of the localized maximum power point tracking unit 211, 212, 213 is electrically connected with the first power output terminal 25 and the second power output terminal 26.

From above description, the present invention provides a solar power generating system for implementing a maximum power point tracking technology in a distributed and localized manner. The solar power generating system comprises a solar panel and a junction box. One or more localized maximum power point tracking units are included in the junction box, and electrically connected with corresponding one or more photovoltaic cell groups of the solar panel. In such way, the maximum power points of the photovoltaic cell groups of the solar panel are tracked and retrieved. Even if the light-receiving surfaces of the photovoltaic cell groups is partially sheltered, the photovoltaic cell groups are still able to output less power to the inverter. Consequently, output power of each solar panel is increased, and the overall power generation efficiency and the solar power generating system is increased. Moreover, the junction box may be installed on the solar panel of the solar power generating system. The junction box comprises one or more localized maximum power point tracking units for tracking the maximum power points in a distributed and localized manner. The junction box has a simplified structure and is easily assembled.

## Claims

1. A solar power generating system (2), comprising:
at least one solar panel (20), wherein said solar panel (20) comprises at least one photovoltaic cell group (201, 202, 203), wherein said photovoltaic cell group (201, 202, 203) comprises plural serially-connected photovoltaic cells; and
at least one junction box (21) comprising:
a casing (24) having a receiving space (243);
a first power output terminal (25);
a second power output terminal (26); and
at least one localized maximum power point tracking unit (211, 212, 213) disposed within said receiving space (243) of said casing (24), wherein an input side of said localized maximum power point tracking unit (211, 212, 213) is electrically connected with said at least one photovoltaic cell group (201, 202, 203) of said solar panel (20), and an output side of said localized maximum power point tracking unit (211, 212, 213) is electrically connected with said first power output terminal (25) and said second power output terminal (26), so that the maximum power point of said at least one photovoltaic cell group (201, 202, 203) is tracked by said at least one localized maximum power point tracking unit (211, 212,213).

2. The solar power generating system according to claim 1 wherein said solar panel (20) comprises plural photovoltaic cell groups (201, 202, 203), and said junction box (21) comprises plural localized maximum power point tracking units (211, 212, 213), wherein plural input sides of said localized maximum power point tracking units (211, 212, 213) are electrically connected with respective photovoltaic cell groups (201, 202, 203), and plural output sides of said localized maximum power point tracking units (211, 212, 213) are electrically connected with each other in series or in parallel and electrically connected to said first power output terminal (25) and said second power output terminal (26), so that the maximum power points of said photovoltaic cell groups (201, 202, 203) are tracked by said localized maximum power point tracking units (211, 212, 213).

3. The solar power generating system according to claim 2 wherein said solar panel (20) comprises a first photovoltaic cell group (201), a second photovoltaic cell group (202) and a third photovoltaic cell group (203), and said junction box (21) comprises a first localized maximum power point tracking unit (211), a second localized maximum power point tracking unit (212) and a third localized maximum power point tracking unit (213), wherein said input sides of said first localized maximum power point tracking unit (211), said second localized maximum power point tracking unit (212) and said third localized maximum power point tracking unit (213) are electrically connected with said first photovoltaic cell group (201), said second photovoltaic cell group (202) and said third photovoltaic cell group (203), respectively, wherein said output sides of said first localized maximum power point tracking unit (211), said second localized maximum power point tracking unit (212) and said third localized maximum power point tracking unit (213) are electrically connected with each other.

4. The solar power generating system according to claim 1 wherein said at least one localized maximum power point tracking unit (211, 212, 213) is a DC-DC converter or a DC-AC converter.

5. The solar power generating system according to claim 1 further comprising an inverter (22), which is electrically connected with said at least one junction box (21), wherein by said inverter (22), a DC voltage outputted from said at least one solar panel (20) is converted into an AC voltage, and said AC voltage is provided to a power net or a load.

6. A solar power generating system (2), comprising:
plural solar panel groups (23), which are electrically with each other in parallel, wherein each of said solar panel group (23) comprises plural serially-connected solar panels (20), and each of said solar panels (20) comprises at least one photovoltaic cell group (201, 202, 203), wherein said photovoltaic cell group (201, 202, 203) comprises plural serially-connected photovoltaic cells; and
plural junction boxes (21), which are electrically connected with corresponding solar panels (20), wherein each of said junction boxes (21) comprises:
a casing (24) having a receiving space (243);
a first power output terminal (25);
a second power output terminal (26); and
at least one localized maximum power point tracking unit (211, 212, 213) disposed within said receiving space (243) of said casing (24), wherein an input side of said localized maximum power point tracking unit (211, 212, 213) is electrically connected with said at least one photovoltaic cell group (201, 202, 203) of said solar panel (20), and an output side of said localized maximum power point tracking unit (211, 212, 213) is electrically connected with said first power output terminal (25) and said second power output terminal (26), so that the maximum power point of said at least one photovoltaic cell group (201, 202, 203) is tracked by said at least one localized maximum power point tracking unit (211, 212, 213).

7. The solar power generating system according to claim 6 further comprising an inverter (22), which is electrically connected with said plural solar panel groups (23), wherein by said inverter (22), a DC voltage outputted from said plural solar panel groups (23) is converted into an AC voltage, and said AC voltage is provided to a power net or a load.

8. A junction box (21) connected with a solar panel (20), said solar panel (20) comprising at least one photovoltaic cell group (201, 202, 203), said junction box (21) comprising:
a casing (24) having a receiving space (243);
a first power output terminal (25);
a second power output terminal (26); and
a circuit module (28) disposed within said receiving space (243) of said casing (24), and comprising at least one localized maximum power point tracking unit (211, 212, 213), wherein an input side of said localized maximum power point tracking unit (211, 212, 213) is electrically connected with said at least one photovoltaic cell group (201, 202, 203) of said solar panel (20), and an output side of said localized maximum power point tracking unit (211, 212, 213) is electrically connected with said first power output terminal (25) and said second power output terminal (26), so that the maximum power point of said at least one photovoltaic cell group (201, 202, 203) is tracked by said at least one localized maximum power point tracking unit (211, 212, 213).

9. The junction box according to claim 8 wherein said solar panel (20) comprises plural photovoltaic cell groups (201, 202, 203), and said junction box (21) comprises plural localized maximum power point tracking units (211, 212, 213), wherein plural input sides of said localized maximum power point tracking units (211, 212, 213) are electrically connected with respective photovoltaic cell groups (201, 202, 203), and plural output sides of said localized maximum power point tracking units (211, 212, 213) are electrically connected with each other in series or in parallel and electrically connected to said first power output terminal (25) and said second power output terminal (26), so that the maximum power points of said photovoltaic cell groups (201, 202, 203) are tracked by said localized maximum power point tracking units (211, 212, 213).

10. The junction box according to claim 9 wherein said casing (24) comprises a base (241) and an upper cover (242), wherein said upper cover (242) is detachably fixed on said base (241), and said base (241) has at least one entrance (244), wherein plural wire pairs (204, 205, 206) of said photovoltaic cell groups (201, 202, 203) are introduced into said casing (24) through said entrance (244).

11. The junction box according to claim 9 further comprising plural wire-connecting members (27), which are accommodated within said receiving space (243) of said casing (24) and electrically connected with respective wire pairs (204, 205, 206) of said plural photovoltaic cell groups (201, 202, 203) of said solar panel (20), wherein said circuit module (28) is electrically connected between said wire-connecting members (27) and said first power output terminal (25) and said second power output terminal (26).

12. The junction box according to claim 11 wherein said circuit module (28) comprises a circuit board (281) with a first edge (282) and a second edge (283), wherein said localized maximum power point tracking units (211, 212, 213) are discretely arranged on the circuit board (281), wherein said input side of each of said localized maximum power point tracking units (211, 212, 213) comprises a first input terminal and a second input terminal, and said output side of each of said localized maximum power point tracking units (211, 212, 213) comprises a first output terminal and a second output terminal, wherein said first input terminal and said second input terminal are located at said first edge (282) of said circuit board (281) and connected with corresponding wire-connecting members (27), and said first output terminal and said second output terminal are located at said second edge (283) of said circuit board (281).

13. The junction box according to claim 12 wherein said first output terminal of said first one of said plural localized maximum power point tracking units (211, 212, 213) is electrically connected with said first power output terminal (25), and said second output of said last one of said plural localized maximum power point tracking units (211, 212, 213) is electrically connected with said second power output terminal (26), wherein said circuit module (28) further comprises plural conductor lines (214, 215), and said second output terminal of a specified localized maximum power point tracking unit (211, 212, 213) is electrically connected with said first output terminal of an adj acent localized maximum power point tracking unit (211, 212, 213) through a corresponding conductor line (214, 215).

14. The junction box according to claim 12 wherein said first output terminals of said plural localized maximum power point tracking units (211, 212, 213) are electrically connected with each other and connected with said first power output terminal (25), and said second output terminals of said plural localized maximum power point tracking units (211, 212, 213) are electrically connected with each other and connected with said second power output terminal (26).

15. The junction box according to claim 8 wherein said circuit module (28) is replaceable and accommodated within the receiving space (243) of said casing (24), and said circuit module (28) is fixed within said casing (24) by plural fastening elements (29).
